# EUROPEAN PATENT APPLICATION

(11) **EP 1 818 947 A2**
(43) Date of publication of application: **15.08.2007**
(21) Application number: 07100798.3
(22) Date of filing: 19.01.2007
(51) Int. Cl.: H01B 12/06

(54) **Superconductor cable**

(30) Priority: 13.02.2006 IT MI20060257
(71) Applicant: Tratos Cavi S.p.A., 52036 Pieve S. Stefano AR (IT)
(72) Inventor: Valori, Domenico, 52037 Sansepolcro (AR) (IT)
(74) Representative: Pesce, Michele

(57) **Abstract**

The superconductor cable (1) comprises a core (2) defined by a cord (3) which provides the mechanical support and is embedded in a matrix (4) of electrically conductive material. A first layer (5) of wires of superconductor material is formed on the core (2). The core (2) absorbs those currents exceeding the superconductor critical currents at the existing temperatures, in the case of faults in one or more superconductor elements or a temperature rise of the environment above the normal operating temperature.

## Description

The present invention relates to a superconductor cable.

As it is known, superconductors are materials presenting very low electrical resistance which enable electric current to pass through with extremely low losses.

Superconductor cables are currently produced using cords of copper/niobium or copper/lanthanum alloys; when cooled to extremely low temperatures (8-10K corresponding to -265/-263°C) they present superconductor behaviour.

Operating at the indicated temperatures (close to absolute zero) obviously poses numerous practical problems, for overcoming which new materials have been developed presenting superconductor behaviour at higher temperatures than those indicated.

In particular, superconductor elements of MgB2 (magnesium diboride) have been developed, embedded in metallic structures of various forms, which present the superconductivity phenomenon up to temperatures of a few tens of K (specifically up to 33/35 K); using these materials special cables with wires and/or strips of superconductor material have been produced which are usable up to the (relatively high) specified temperatures.

However, the aforedescribed superconductor cables are extremely sensitive to their operating temperature and, as a result of a technical defect or an increase in the temperature of the environment in which the superconductor cables are contained, the superconductor cables can undergo a sudden fall-off in the superconductor characteristics of the materials (critical current), with a consequent increase in their electrical resistance; this has disastrous consequences on the superconductor cables because of the very large currents carried by them.

The technical aim of the present invention is therefore to provide a superconductor cable which enables the stated drawbacks of the known art to be eliminated.

Within the scope of this technical aim an object of the invention is to provide a superconductor cable which is able to resist and overcome problems as a result of which the superconductive characteristics of the material decline; in particular according to the invention, the cable is able to resist sudden increases in the temperature of the environment in which the superconductor cable is inserted or damage to the superconductor wires without the very high currents transported by the cables generating situations which are dangerous for the cable or for the environment.

The technical aim together with these and further objects are attained according to the invention by a superconductor cable in accordance with claim 1.

Other characteristics of the present invention are defined in the subsequent claims.

Advantageously, the superconductor cable of the invention is able to operate (i.e. transport energy) without generating intense magnetic fields within the surrounding environment.

Further characteristics and advantages of the invention will be more apparent from the description of a preferred but non-exclusive embodiment of the superconductor cable according to the invention, illustrated by way of non-limiting example in the accompanying drawings, in which:

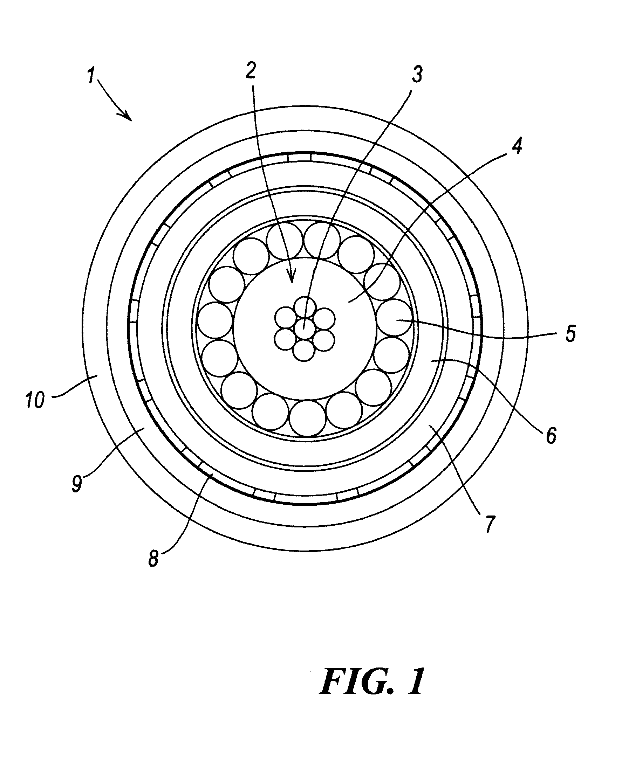

Figure 1 is a section through the superconductor cable of the present invention; and
Figure 2 shows a particular example of a cable according to the invention.

With reference to said figures, these show a superconductor cable indicated overall by the reference numeral 1.

The superconductor cable 1 comprises a core 2 defined by a cord 3 which provides the mechanical support for the cable 1 and is embedded in a matrix 4 of electrically conductive material in the form of annealed aluminium of higher than 99.5% purity; a first layer 5 of wires of superconductor material based on MgB2 is provided on the core 2.

The cable 1 also comprises a layer 6 of insulating material provided about the first layer 5 of superconductor material wires; about the insulating layer 6, the cable 1 presents a layer 7 of electrically conductive material again consisting of annealed aluminium of higher than 99.5% purity, and on this latter a second layer 8 of wires or strips of MgB2 based superconductor material.

On the second layer 8 of wires or strips of superconductor material a layer 9 providing external mechanical protection is applied, the cable 1 presenting about the external mechanical protection layer 9 a sealing layer 10 of annealed aluminium of higher than 99.5% purity, or of Al/Mg or Al/Mn or Al/Zr alloys.

In different embodiments, the cord 3 of the core 2 is formed as metal cord with wires of high strength steel, or of aluminium-nickel alloys of low expansion coefficient, or of carbon fibres, the diameter of the wires of this cord 3 being between 1 and 3.5 millimetres; this cord 3 constitutes the load bearing element of the superconductor cable 1 and is able to withstand the traction forces during its installation and the mechanical tensions deriving from the shrinkage of materials between ambient temperature and -255°C.

The conductive material matrix 4 of the core 2 is formed of annealed aluminium; advantageously the aluminium is secured to the cord 3 of the core 2 by plastic extrusion under high pressure (about 500 atmospheres and 400°C), in order to also penetrate into the stellar areas and completely embed the cord 3 in the aluminium.

The outer diameter of the core (including the cord 3 and the aluminium matrix 4) is between 8.0 and 20.0 millimetres.

The superconductor wires of the layer 5 are based on MgB2 (magnesium diboride) and have a diameter between 1.0 and 5.0 millimetres.

The insulating layer 6 is formed of fluorocarbon materials (such as polytetrafluoroethylene as PTFE, or ETFE, or FEP, or PFA, or MFA) and/or polyimide materials (such as the product kapton produced by Dupont) which are able to resist those temperatures close to absolute zero at which the superconductor cable 1 is required to operate.

The conductive material layer 7 is formed of annealed aluminium (of the same characteristics as the material of the core 2) and has an outer diameter between 15.0 and 30.0 millimetres.

The superconductor wires of the second superconductor layer 8 consist of MgB2 strips of dimensions between 4x0.5 and 8x1.5 millimetres.

The external protection layer 9 is formed from a longitudinally corrugated tubular element of steel (preferably stainless steel) which is shaped and longitudinally welded by TIG (tungsten inert gas) or by laser and has an outer diameter between 18.0 and 38.0 millimetres.

Besides providing mechanical protection for the inner layers of the cable 1, this layer 9 forms a barrier against the effects of any short circuits which could occur within the cable and could cause the liquid hydrogen to explode when the cable is installed in a conduit through which liquid hydrogen flows.

The sealing layer 10 is formed of annealed aluminium and is preferably produced by high pressure plastic extrusion of the aluminium; this layer 10 presents an outer diameter between 20.0 and 45.0 millimetres and ensures a hermetic seal for the inner layers (in particular for the superconductors of the layer 8), preventing any hydrogen infiltration from the outside.

By encircling the steel layer 9, this sheath also reinforces its strength.
The cable of the invention is arranged to transport energy while immersed in a conduit of liquid hydrogen at a temperature of 18 K (corresponding to about -255°C).

The current is transported within the superconductor layer 5; while flowing through this layer the electric current generates a magnetic field which induces an electromotive force within the superconductors of the layer 8; hence, in practice a current is generated within the layer 8 which is equal but of opposite sign to the current flowing through the layer 5, thus annulling the magnetic field outside the superconductor layer 8.

At the operating temperature (18 K) of the cable when in continuous service, the MgB2 elements are able to withstand a current density of about 400A/mm2 (wires) and 400A/mm2 (strips), enabling extremely small superconductive cross-sections to be achieved, even for very high transported current densities, with external cable dimensions compatible with insertion into a liquid hydrogen conduit with very low pressure drops.

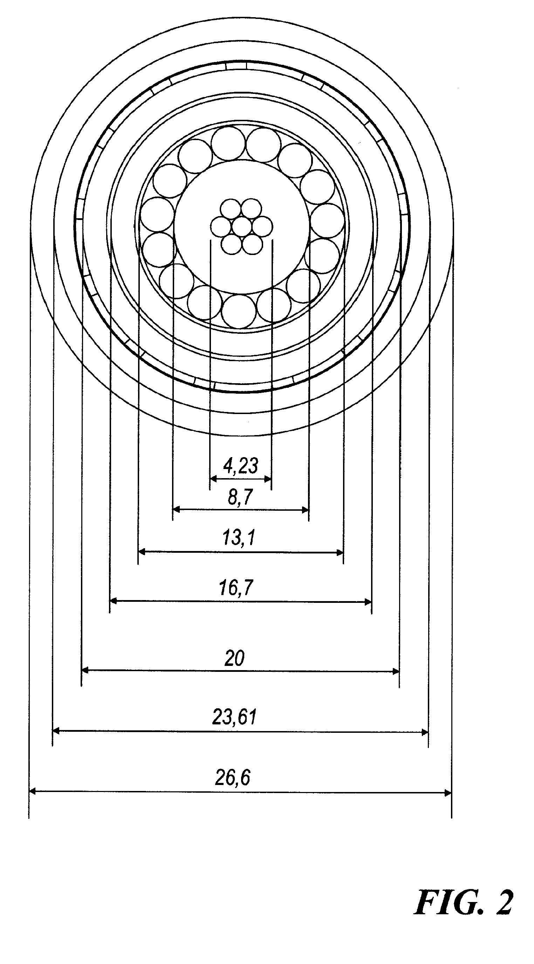

Specifically, the cable illustrated in Figure 2 can transport during continuous service a current of 6500A at a d.c. voltage of 4500KV, corresponding to a power of 29MVA; these values can evidently be increased by increasing the wire diameter and the thickness of the superconductive strips.

The matrix 4 (on which the superconductor wires of the layer 5 rest) forms the electrical earth able to absorb the currents resulting from any faults deriving from one or more superconductors or to resist the consequences of any temperature increase in the liquid hydrogen conduit which would reduce the critical current transported by the superconductors.

Hence the function of the core aluminium is to enable the circuit protections to act without damage to the superconductor cable by, in the case of fault or problems, draining away the current in excess of the critical current for the conductor wires in the superconductivity regime at the contingent temperature.

The aluminium layer 7 performs the same function as the aluminium of the core with regard to the strips of the superconductor layer 8 and constitutes an electrical earth able to absorb any faults in one or more superconductive strips or combat sudden increases in the temperature of the environment in which the cable 1 is contained.

Again in this case, if one of the specified danger situations occurs, the aluminium layer 7 enables the electric circuit protection devices to act without permanent damage occurring to the superconductors, by draining away that current in excess of the critical current for the strips in the superconductivity regime at the contingent temperature.

The aluminium layer 7 also ensures a perfect hermetic seal and prevents liquid hydrogen infiltration, which could damage the insulation or cause damage to the superconductor wires.

It has been found in practice that the superconductor cable of the invention is particularly advantageous by being very reliable and safe.

The superconductor cable conceived in this manner is susceptible to numerous modifications and variants, all falling within the scope of the inventive concept; moreover all details can be replaced by technically equivalent elements.

In practice the materials used and the dimensions can be chosen at will in accordance requirements and the state of the art.

## Claims

1. A superconductor cable (1), **characterised by** comprising a core (2) defined by a cord (3) which provides the mechanical support and is embedded in a matrix (4) of electrically conductive material, a first layer of wires of superconductor material being provided on said core (2).

2. A superconductor cable (1) as claimed in claim 1, **characterised by** comprising a layer (6) of insulating material provided about the first layer (5) of superconductor material wires.

3. A superconductor cable (1) as claimed in one or more of the preceding claims, **characterised in that** the cable (1) presents about the insulating layer (6) a layer (7) of electrically conductive material, and on this latter a second layer (8) of wires or strips of superconductor material.

4. A superconductor cable (1) as claimed in one or more of the preceding claims, **characterised in that** a layer (9) for external mechanical protection is provided on the second layer (8) of wires or strips of superconductor material.

5. A superconductor cable (1) as claimed in one or more of the preceding claims, **characterised in that** the cable (1) presents a sealing layer (10) about the external mechanical protection layer (9).

6. A superconductor cable (1) as claimed in one or more of the preceding claims, **characterised in that** the cord (3) of said core (2) is formed as metal cord (3) with wires of high strength steel, or of aluminium-nickel alloys of low expansion coefficient, or of carbon fibres.

7. A superconductor cable (1) as claimed in one or more of the preceding claims, **characterised in that** the diameter of the wires of said core cord (3) is between 1 and 3.5 millimetres.

8. A superconductor cable (1) as claimed in one or more of the preceding claims, **characterised in that** the conductive material matrix (4) of said core (2) is formed of aluminium.

9. A superconductor cable (1) as claimed in one or more of the preceding claims, **characterised in that** the aluminium is secured to the cord (3) of the core (2) by plastic extrusion under high pressure, in order to penetrate into the stellar areas of the cord (3).

10. A superconductor cable (1) as claimed in one or more of the preceding claims, **characterised in that** the outer diameter of the core (2) is between 8.0 and 20.0 millimetres.

11. A superconductor cable (1) as claimed in one or more of the preceding claims, **characterised in that** the superconductor wires of the first layer are based on MgB2.

12. A superconductor cable (1) as claimed in one or more of the preceding claims, **characterised in that** the diameter of the superconductor wires of the first layer (5) is between 1.0 and 5.0 millimetres.

13. A superconductor cable (1) as claimed in one or more of the preceding claims, **characterised in that** the insulating layer (6) is formed of fuorocarbon and/or polyimide materials.

14. A superconductor cable (1) as claimed in one or more of the preceding claims, **characterised in that** the conductive material layer (7) is formed of aluminium.

15. A superconductor cable (1) as claimed in one or more of the preceding claims, **characterised in that** the aluminium layer (7) has an outer diameter between 15.0 and 30.0 millimetres.

16. A superconductor cable (1) as claimed in one or more of the preceding claims, **characterised in that** the superconductor wires or strips of the second superconductor layer (8) consist of MgB2 strips.

17. A superconductor cable (1) as claimed in one or more of the preceding claims, **characterised in that** said strips have dimensions between 4x0.5 and 8x1.5 millimetres.

18. A superconductor cable (1) as claimed in the preceding claim, **characterised in that** the external protection layer (9) is formed from a longitudinally corrugated tubular element.

19. A superconductor cable (1) as claimed in the preceding claim, **characterised in that** the tubular element is formed of steel.

20. A superconductor cable (1) as claimed in the preceding claim, **characterised in that** the outer diameter of the tubular element is between 18.0 and 38.0 millimetres.

21. A superconductor cable (1) as claimed in one or more of the preceding claims, **characterised in that** the sealing layer (10) is formed of aluminium.

22. A superconductor cable (1) as claimed in one or more of the preceding claims, **characterised in that** the sealing layer (10) is formed by high pressure plastic extrusion of aluminium.

23. A superconductor cable (1) as claimed in the preceding claim, **characterised in that** the sealing layer (10) has an outer diameter between 20.0 and 45.0 millimetres.

24. An energy transport system, **characterised by** comprising a conduit of liquid hydrogen, the interior of which houses at least one cable (1) formed in accordance with one or more of claims 1-23.
